# EUROPEAN PATENT SPECIFICATION

(11) **EP 0 280 230 B1**
(45) Date of publication and mention of the grant of the patent: **08.09.1993**
(21) Application number: 88102564.7
(22) Date of filing: 22.02.1988
(51) Int. Cl.: G01N 27/30

(54) **Instrument for potentiometric electrochemical measurements in an electrolyte solution**
Gerät zur Messung von elektrochemischen Potentialen in/an einer Elektrolytlösung
Instrument pour mesure de potentiel électrochimique dans une solution d'un électrolyte

(30) Priority: 27.02.1987 US 20056
(43) Date of publication of application: 31.08.1988
(73) Proprietor: GENERAL SIGNAL CORPORATION, Stamford Connecticut 06904 (US)
(72) Inventor: Connery, James G., Lansdale Pennsylvania (US); Shaffer, Earl W., Jr., Lansdale Pennsylvania (US)
(74) Representative: Baillie, Iain Cameron

(56) References cited:
- EP-A- 0 186 210
- FR-A- 2 127 918
- US-A- 4 189 367
- ISA TRANSACTIONS, vol. 16, no. 3, 1977, pages 67-71; S.C.CREASON et al.: "Problems and Solutions in pH Measurement"
- PATENT ABSTRACTS OF JAPAN, vol. 9, no. 129 (P-361)(1852), 5th June 1985;& JP-A-6014159
- PATENT ABSTRACTS OF JAPAN, vol. 9, no. 210 (P-383)(1933), 28th August 1985;& JP-A-6073449
- R.LANDSBERG & M.BARTELT: "Elektrochemische Reaktionen und Prozesse",1st October 1975, VEB Deutscher Verlag der Wissenschaften, Berlin, DE; page 116

## Description

This invention relates to apparatus for potentiometric electrochemical measurements employing ion selective probe systems such as glass pH electrode systems or other ion-selective electrode systems and ISFET pH devices. It is particularly useful in making pH measurements with these probe systems in solutions of low electrolytic conductivity, such as high purity water.

A typical pH measuring system, as found in the prior art, is shown in U.S. Patent 4,189,367, issued to the present inventors on Feb. 19, 1980. That system utilizes an operational amplifier to drive the reference electrode through the low impedance output of the amplifier to maintain the pH electrode, connected to the amplifiers high input impedance summing junction, at signal common voltage. Such a measurement approach is entirely adequate for solutions with an electrolytic conductivity greater than 1 microsiemens. However, when such systems are used for pH measurements of earth grounded solutions of high purity water (less than 0.1 microsiemens), such as are found in electric power plants, it has been observed that they are subject to noise pickup and, also, to an offset or shift in the pH reading. It has further been discovered that the major source of error in high purity water measurements is caused by parasitic leakage currents flowing from the grounded solution through the reference electrode when said electrode is connected to a low impedance point in the electronic circuit. These leakage currents then flow through the low impedance path to the common or ground terminal of the power supply, through the power transformer, and through leakage on printed circuit cards in the system to produce, as a result, a leakage path between the circuit common and the AC power line. The instantaneous effects of the leakage currents which flow through this path are produced in direct proportion to the electrolytic resistance of the solution at the reference electrode/solution interface. The presence of parasitic AC currents in this path produces noise in the measurement and parasitic DC currents product a shift in output, both are directly observed as errors in the pH reading. Longer term integration of DC leakage currents and electrode rectified AC currents will result in a drift of electrode output with a commensurate drift in instrument accuracy.

One arrangement for reducing leakage currents to ground is described by Creason and Delettrez in ISA Transactions, Volume 16, number 3, pages 67-71, "Problems and Solutions in pH Meaurement", wherein the reference electrode is tied directly to the input of a separate high-input-impedance amplifier (as is the glass pH electrode) and is not a convenient path to ground.

In accordance with this invention there is provided an apparatus for measuring the concentration of a selected ion in a grounded electrolyte solution comprising an ion selective probe system including an ion selective device responsive to the concentration of a selected ion in the solution and a reference electrode; a potential measuring device connected to said reference electrode; and a control amplifier connected to said probe system, characterized in that the potential measuring device has a high impedance input connected to said reference electrode; and in that the output of the control amplifier is connected to said probe system through a counter electrode in such magnitude and sense to maintain the electrical characteristic of said ion selective device relative to the circuit common potential such that the potential of said reference electrode, as measured by said measuring device, provides an indication of the concentration of said selected ion in said solution.

In the drawings, where like references refer to like elements:
Fig. 1 is a circuit diagram of a known prior art potentiometric electrochemical measuring system for measuring pH.
Fig. 2 is a circuit diagram of a pH measuring system which utilizes the invention with a glass electrode system.
Fig. 3 is a circuit diagram of a pH measuring system which utilizes an ISFET type pH sensitive device.

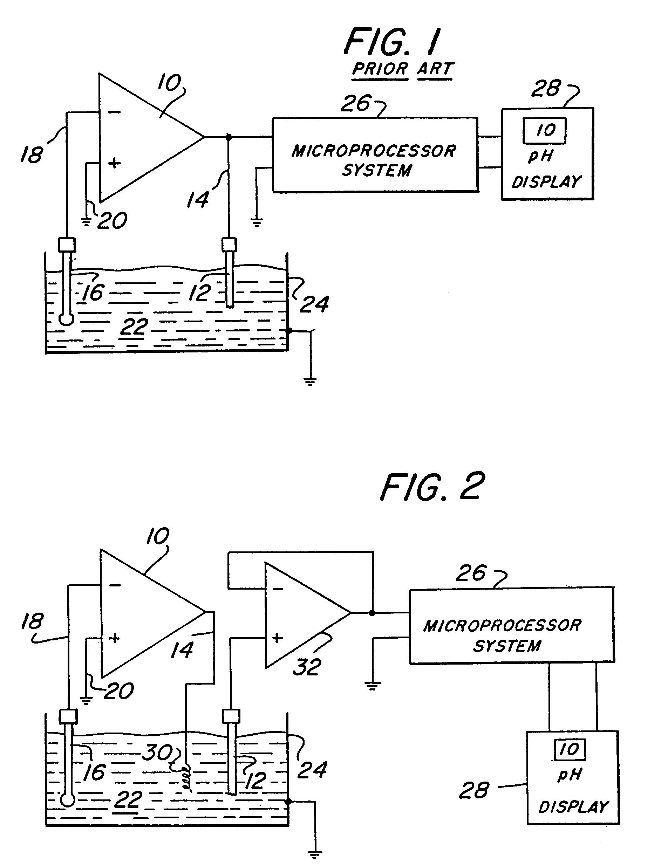

Fig. 1, which illustrates the prior art systems, utilizes the control amplifier, shown as an operational amplifier 10, to drive the reference electrode 12 from the amplifier's low impedance output on line 14 so as to maintain the glass pH electrode 16, connected by line 18 to the inverting input of the amplifier, substantially at circuit common. Circuit common is the potential at the non-inverting input of the amplifier, shown as line 20. By holding the glass electrode at circuit common, the potential on line 14 at the output of the amplifier 10 is indicative of the pH of the solution 22, shown as being in a grounded container 24. A microprocessor based measuring system 26 is shown as a preferred means for processing the output of the amplifier 10 to provide an indication of the pH of the solution on the display device 28: an analog implementation can also be used.

With solutions having a conductivity below 1 microsiemens, for example, as is the case with high purity water, it has been found that spurious AC as well as DC currents may be present in the system and can therefore be picked up by the system. AC currents can cause noise and the DC currents can cause shifts in the readings on the display. An undesirable side effect, which is not immediately evident, is the possible deterioration of the reference cell which may result from those currents. In view of these problems, it is highly desirable to avoid such spurious currents in the reference electrode and to find a way to keep them from interfering with the measuring system. Preventing the spurious currents by enhancing power supply isolation is both difficult and costly.

It has been found that the leakage currents, per se, are not the problem, but their flow into the reference electrode is the source of the effects noted. It is desirable, therefore, to connect the reference electrode to a low leakage, high impedance system in order to inhibit current flow. This has been accomplished by inserting an additional metal electrode, such as electrode 30, into the solution being measured in order to channel the spurious currents through that electrode rather than through the reference electrode. This additional electrode may be properly called a counter electrode. Thus, in Fig. 2 a metal wire is shown as counter electrode 30, and it is connected to the output of the amplifier 10, where the reference electrode was connected in the prior art systems. The reference electrode 12 is then connected to the measuring circuit, which consists of the microprocessor based measuring system 26 and the display unit 28. In order to further prevent the flow of spurious currents in the reference electrode, as was mentioned above, it is necessary to connect it to the measuring system through a high impedance circuit, such as a the buffer amplifier 32. A further advantage accrues from improved reference electrode stability because the reduction of spurious AC and DC currents reduces electrochemical changes in the reference electrode.

In the circuit of Fig. 2, the counter electrode is driven by the output of the amplifier so that the pH electrode is maintained at signal common, as occurred in the prior art system of Fig. 1 with the reference electrode connected to the amplifier output. The voltage obtained at the metal counter electrode is unimportant, for it only serves to maintain the glass electrodes potential at signal common. The counter electrode may, by way of example, be a metallic electrode housing or an earth grounded pipe fitting in close proximity to the pH electrode. Because its potential is unimportant, parasitic currents in the counter electrode are of no consequence. Since the glass electrode is controlled to be at circuit common, it is only necessary to measure with a measuring circuit of high input impedance the potential of the reference electrode versus signal common in order to obtain a measure of the pH. With this circuit, it has been found that AC noise rejection has been improved, and there is virtual immunity to DC leakage currents.

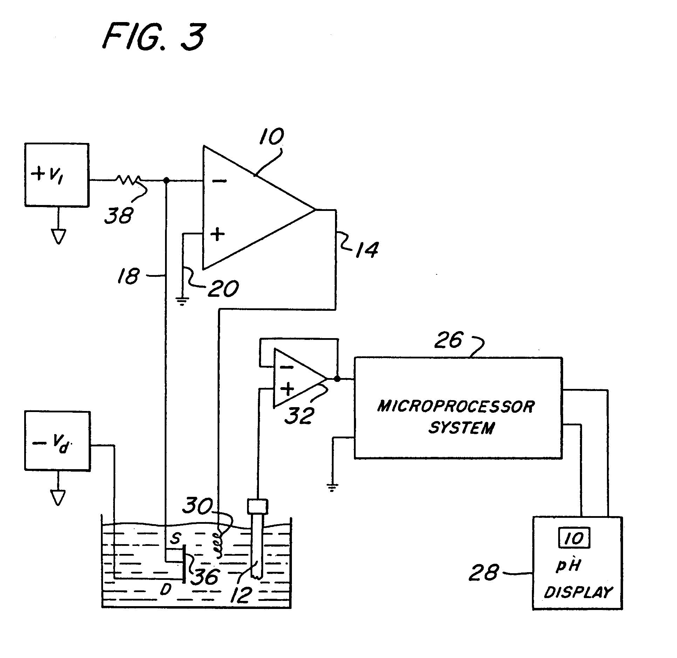

The principles of this improved circuit can also be applied to ISFET probe systems, as is shown in Fig. 3. In that figure a P-channel enhancement mode ISFET 36 has its source connected to the inverting input of the amplifier 10. The voltage source -V_{d} controls the drain-source voltage at the preselected level. A source of potential is connected to the inverting input of the amplifier by way of a resistor R₁, shown as 38, which controls the drain current at V₁/R₁. As is also shown in Fig. 3, the reference electrode 12 is connected to the input of the measuring system and the output of the amplifier is connected to a counter electrode 30. The ISFET electrode system may, in one of its possible forms, be constructed as disclosed in U.S. Patent 4,505,799, issued on March 19, 1985 to Ronald D. Baxter, a coworker of ours.

## Claims

1. Apparatus for measuring the concentration of a selected ion in a grounded electrolyte solution (22) comprising an ion selective probe system including an ion selective device (16, 36) responsive to the concentration of a selected ion in the solution and a reference electrode (12); a potential measuring device (32, 26) connected to said reference electrode; and a control amplifier (10) connected to said probe system, characterized in that the potential measuring device (32, 26) has a high impedance input connected to said reference electrode (12); and in that the output of the control amplifier (10) is connected to said probe system through a counter electrode (30)in such magnitude and sense to maintain the electrical characteristic of said ion selective device relative to the circuit common potential such that the potential of said reference electrode, as measured by said measuring device, provides an indication of the concentration of said selected ion in said solution.

2. Apparatus according to claim 1, characterized in that the control amplifier (10) is an operational amplifier having its inverting input connected to the ion selective device (16, 36), its non-inverting input connected to circuit common, and its output connected to the counter electrode (30) so that said amplifier tends to drive the potential of the ion selective device to circuit common potential.

3. Apparatus according to claim 2, characterized in that the ion selective device is a pH glass electrode.

4. Apparatus according to claim 1, characterized in that said ion selective device (16, 36) is an ISFET, and in that the amplifier is connected to the probe system so that its output through the counter electrode (30) is effective to maintain a constant drain-to-source voltage and drain-to-source-current.

5. Apparatus according to claim 1, characterized in that the counter electrode (3) is a metal electrode.

6. Apparatus according to claim 4, characterized in that the ISFET is responsive to pH and has its source connected to a voltage supply by way of a resistor (38).

7. Apparatus according to claim 6, characterized in that the counter electrode (30) is physically mounted in close proximity to said ISFET.

8. Apparatus according to claim 1, characterized in that the electrolyte solution (22) is a grounded solution having low conductivity.

## Patentansprüche

1. Vorrichtung zur Messung der Konzentration eines ausgewählten Ions in einer Boden-Elektrolytlösung (22), umfassend ein Ionenselektiv-Meßfühlersystem, welches eine Ionenselektiv-Einrichtung (16, 36) aufweist, die auf die Konzentration eines ausgewählten Ions in der Lösung anspricht sowie eine Bezugselektrode (12); eine Potential-Messungseinrichtung (32, 26), die mit der genannten Bezugselektrode verbunden ist; und einen Steuerungsverstärker (10), der mit dem genannten Meßfühlersystem verbunden ist, dadurch gekennzeichnet, daß die genannte Potential-Messungseinrichtung (32, 26) einen hochohmigen Eingang aufweist, der mit der genannten Bezugselektrode (12) verbunden ist; und dadurch, daß der Ausgang des Steuerungsverstärkers (10) durch eine Gegenelektrode (30) mit dem genannten Meßfühlersystem verbunden ist, und zwar mit einer Größe und Richtung, um die elektrische Eigenschaft der genannten Ionenselektiv-Einrichtung in bezug auf das in dem Schaltkreis vorhandene Potential aufrecht zu erhalten, so daß das Potential der genannten Bezugselektrode, wie dies durch die genannte Messungseinrichtung gemessen wird, für eine Anzeige der Konzentration des genannten ausgewählten Ions in der genannten Lösung sorgt.

2. Vorrichtung nach Anspruch 1, dadurch gekennzeichnet, daß der Steuerungsverstärker (10) einen Operationsverstärker darstellt, dessen invertierender Eingang mit der Ionenselektiv-Einrichtung (16, 36) verbunden ist, und dessen nichtinvertierender Eingang mit dem vorhandenen Schaltkreis verbunden ist, und dessen Ausgang mit der Gegenelektrode (30) verbunden ist, so daß der genannte Verstärker dazu neigt, das Potential der Ionenselektiv-Einrichtung auf das in dem Schaltkreis vorhandene Potential zu treiben.

3. Vorrichtung nach Anspruch 2, dadurch gekennzeichnet, daß es sich bei der Ionenselektiv-Einrichtung um eine pH-Glaselektrode handelt.

4. Vorrichtung nach Anspruch 1, dadurch gekennzeichnet, daß es sich bei der Ionenselektiv-Einrichtung (16, 36) um einen ionensensitiven Feldeffekttransistor handelt, und daß der Verstärker mit dem Meßfühlersystem verbunden ist, so daß dessen Ausgang durch die Gegenelektrode (30) so wirkt, daß eine konstante Drain-Source-Spannung und ein konstanter Drain-Source-Strom beibehalten wird.

5. Vorrichtung nach Anspruch 1, dadurch gekennzeichnet, daß es sich bei der Gegenelektrode (3) um eine Metallelektrode handelt.

6. Vorrichtung nach Anspruch 4, dadurch gekennzeichnet, daß der ionensensitive Feldeffekttransistor auf den pH-Wert anspricht, und daß dessen Source über einen Widerstand (38) mit einer Spannungszufuhr verbunden ist.

7. Vorrichtung nach Anspruch 6, dadurch gekennzeichnet, daß die Gegenelektrode (30) in physikalisch naher Nachbarschaft zu dem genannten ionensensitiven Feldeffekttransistor angebracht ist.

8. Vorrichtung nach Anspruch 1, dadurch gekennzeichnet, daß es sich bei der Elektrolytlösung (22) um eine Bodenlösung mit geringer Leitfähigkeit handelt.

## Revendications

1. Appareil pour mesurer la concentration d'un ion choisi dans une solution d'électrolyte (22) reliée à la masse, comprenant un système à sonde à sélectivité ionique comportant un dispositif à sélectivité ionique (16, 36) sensible à la concentration d'un ion choisi dans la solution et une électrode de référence (12), un dispositif de mesure de potentiel (32, 26) relié à ladite électrode de référence, et un amplificateur de commande (10) relié audit système à sonde, caractérisé en ce que le dispositif de mesure de potentiel (32, 26) a une entrée à haute impédance reliée à ladite électrode de référence (12), et en ce que la sortie de l'amplificateur de commande (10) est reliée audit système à sonde par l'intermédiaire d'une contre-électrode (30) avec une amplitude et un sens permettant de maintenir les caractéristiques électriques dudit dispositif à sélectivité ionique par rapport au potentiel de la masse de manière que le potentiel de ladite électrode de référence, mesuré par ledit dispositif de mesure, donne une indication de la concentration dudit ion choisi dans ladite solution.

2. Appareil selon la revendication 1, caractérisé en ce que l'amplificateur de commande (10) est un amplificateur opérationnel ayant son entrée inverseuse reliée au dispositif à sélectivité ionique (16, 36), son entrée non inverseuse reliée à la masse et sa sortie reliée à la contre-électrode (30), de sorte que ledit amplificateur a tendance à amener le potentiel du dispositif à sélectivité ionique au potentiel de la masse.

3. Appareil selon la revendication 2, caractérisé en ce que le dispositif à sélectivité ionique est une électrode de pH en verre.

4. Appareil selon la revendication 1, caractérisé en ce que ledit dispositif à sélectivité ionique (16, 36) est un ISFET et en ce que l'amplificateur est relié au système à sonde de manière que sa sortie par l'intermédiaire de la contre-électrode (30) soit efficace pour maintenir une tension constante entre le drain et la source et un courant constant entre le drain et la source.

5. Appareil selon la revendication 1, caractérisé en ce que la contre-électrode (3) est une électrode métallique.

6. Appareil selon la revendication 4, caractérisé en ce que le ISFET est sensible au pH et a sa source reliée à une source de tension au moyen d'une résistance (38).

7. Appareil selon la revendication 6, caractérisé en ce que la contre-électrode (30) est montée physiquement à proximité immédiate dudit ISFET.

8. Appareil selon la revendication 1, caractérisé en ce que la solution d'électrolyte (22) est une solution reliée à la masse de faible conductivité.
